(19) Europäisches Patentamt
European Patent Office
Office européen des brevets

(11) Veröffentlichungsnummer: **0 000 047**
**A1**

(12) # EUROPÄISCHE PATENTANMELDUNG

(21) Anmeldenummer: **78100087.2**

(22) Anmeldetag: **05.06.78**

(51) Int. Cl.[2]: **C 08 J 5/18**, C 08 G 63/68, C 08 L 67/00, H 01 B 3/42

(30) Priorität: **10.06.77 DE 2726189**

(43) Veröffentlichungstag der Anmeldung: **20.12.78 Patentblatt 78/1**

(84) Benannte Vertragsstaaten: **DE FR GB LU NL**

(71) Anmelder: **HOECHST AKTIENGESELLSCHAFT, KALLE, *Patentabteilung Postfach 3540*, D-6200 Wiesbaden 1 (DE)**

(72) Erfinder: **Hoheisel, Klaus, Dr., Lohmühlweg 13, D-6200 Wiesbaden (DE)**

(72) Erfinder: **Bollert, Ulrich, Dr., Holunderweg 4, D-6238 Hofheim-Diedenbergen (DE)**

(72) Erfinder: **Janocha, Siegfried, Dr., Am Hohen Stein 6, D-6200 Wiesbaden (DE)**

(54) **Flammwidrig ausgerüstete, biaxial orientierte Polyesterfolie und ihre Verwendung.**

(57) Flammwidrig ausgerüstete, biaxial orientierte Polyesterfolie und ihre Verwendung

Flammwidrig ausgerüstete, biaxial orientierte, insbesondere thermofixierte Folie, die in Längs- und Querrichtung vorzugsweise um das 2,5- bis 4,5- fache gestreckt ist, aus einem linearen Polyester aus Dicarbonsäure- und Diolkomponenten sowie P-haltigen Kettengliedern, wobei die P-haltigen Kettenglieder Struktureinheiten der Formel

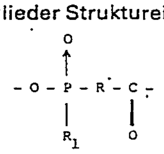

sind, welche ca. 3 bis 20 Molprozent der Säurekomponente des Polyesters ausmachen, wobei in der Formel

R einen gesättigten, offenkettigen oder cyclischen Alkylen-, einen Arylen- oder einen Aralkylenrest und

$R_1$ eine Alkylgruppe mit bis zu 6 C-Atomen, eine Aryl- oder Aralkylgruppe

bedeutet.

Die flammwidrige Folie ist vorzugsweise für den Einsatz auf dem Elektrosektor geeignet, z.B. zur Nutisolation und Kabelisolation und wird nach Bedampfen mit Aluminium als Kondensatorfolie eingesetzt.

EP 0 000 047 A1

HOECHST AKTIENGESELLSCHAFT
KALLE Niederlassung der Hoechst AG

Hoe 77/K 033 Wiesbaden-Biebrich 1. Juni 1978
WLJ-Dr.Gt-df

Flammwidrig ausgerüstete, biaxial orientierte Polyesterfolie und ihre Verwendung

Die vorliegende Erfindung betrifft eine flammwidrig ausgerüstete, biaxial orientierte Polyesterfolie.

In der Technik werden biaxial orientierte Folien aus linearen Polyestern, insbesondere aus Polyäthylenterephthalat, in starkem Maße eingesetzt. Hierzu zählen u.a. besonders die Einsatzgebiete auf dem Elektrosektor, z.B. zur Herstellung von Transformatoren, Drahtisolationen, als Flachbandleiter, Kabel-und Nutisolationen oder zur Herstellung von Kondensatoren.

Im Zuge der erhöhten Sicherheit, z.B. im Rundfunk- und Fernsehbau oder bei schnellaufenden Motoren, ist es wünschenswert, solche Polyesterfolien in höhere Wärmeklassen zu bringen und ihre Flammwidrigkeit zu erhöhen.

Aus der DE-OS 23 46 787 sind schwerentflammbare lineare Polyester aus Dicarbonsäure- und Diolkomponenten sowie P-haltigen Kettengliedern bekannt, deren kennzeichnendes Merkmal darin besteht, daß die P-haltigen Kettenglieder Struktureinheiten der Formel

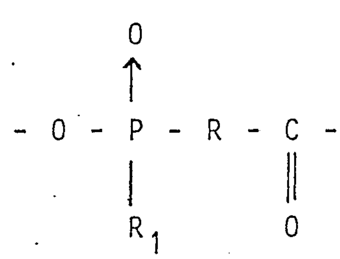

sind, welche ca. 3 bis 20 Molprozent der Säurekomponente des Polyesters ausmachen, wobei in der Formel

R einen gesättigten, offenkettigen oder cyclischen Alkylen-, einen Arylen- oder einen Aralkylenrest und

$R_1$ eine Alkylgruppe mit bis zu 6 C-Atomen, eine Aryl- oder Aralkylgruppe

bedeutet.

Die Anmeldung gibt zwar einen Hinweis darauf, aus diesen Polyestern Formkörper, insbesondere in Form von Fasern, herzustellen, jedoch ist hierin keinerlei Anregung zu finden, biaxial orientierte Folien für den vorzugsweisen Einsatz auf dem Elektrosektor zu schaffen.

Es stellte sich somit die Aufgabe, eine flammwidrige, biaxial orientierte Polyesterfolie mit flammwidriger Ausrüstung zu schaffen, wobei die speziellen physikalischen Eigenschaften, insbesondere die elektrischen Eigenschaften, gegenüber denen aus reinen Polyesterfolien nicht verschlechtert sind.

Gelöst wird die vorstehend genannte Aufgabe durch eine Folie aus einem linearen Polyester aus Dicarbonsäure- und Diolkomponenten sowie P-haltigen Kettengliedern, wobei die P-haltigen Kettenglieder Struktureinheiten der Formel

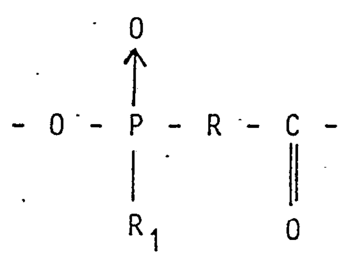

sind, welche ca. 3 bis 20 Molprozent der Säurekomponente des Polyesters ausmachen, wobei in der Formel

R einen gesättigten, offenkettigen oder cyclischen Alkylen-, einen Arylen- oder einen Aralkylenrest und

$R_1$ eine Alkylgruppe mit bis zu 6 C-Atomen, eine Aryl- oder Aralkylgruppe

bedeutet, deren kennzeichnendes Merkmal darin besteht, daß sie biaxial orientiert ist.

Wenn auch grundsätzlich alle in der DE-OS genannten Polyester für die vorliegende Erfindung eingesetzt werden können, so sind doch Polyester bevorzugt, die P-haltige Kettenglieder mit Struktureinheiten der Formel

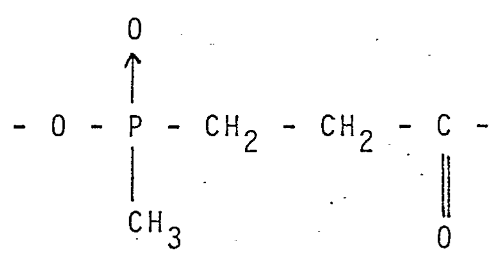

aufweisen, wobei der Anteil insbesondere 3 bis 10 Molprozent Säurekomponente des Polyesters ausmacht. Bevorzugt aus der Reihe der Polyester sind solche aus Polyäthylen- oder Polybutylenterephthalat.

Um wenig schrumpfende Folien zu erhalten, werden die

Folien nach der Erfindung bevorzugt thermofixiert.

Da für viele Anwendungszwecke die Folien einen guten Schlupf besitzen sollen, können die an sich bekannten Schlupfmittel eingesetzt werden, wobei $SiO_2$ bevorzugt ist. In der Praxis hat sich ein $SiO_2$ besonders bewährt, das durch Hydrolyse von Siliciumhalogeniden hergestellt wurde.

Die erfindungsgemäßen Folien sind in Längs- und Querrichtung je um das 2,5- bis 4,5-fache gestreckt, wobei eine Streckung im Bereich um das 3,5-fache bevorzugt ist. Für die Streckung können alle gängigen Verfahren der Flach- und Schlauchstreckung für Polyester Anwendung finden, wobei auch eine Mehrfachstreckung in wenigstens einer der Richtungen oder eine Simultanstreckung eingeschlossen sind.
Damit die Folie hoher mechanischer Beanspruchung standhält, weist sie in bevorzugter Ausführung eine Reißfestigkeit von $> 200\ N/mm^2$ auf.
Die Reißdehnung sollte $> 100\%$ in Längs- und Querrichtung sein.
Für viele Anwendungszwecke werden Folien benötigt, die einen geringen Schrumpf bei hohen Temperaturen aufweisen. Bevorzugt sind im Rahmen der Erfindung Folien, deren Schrumpf $< 5\%$ bei 150°C (gemessen in Luft, 15 min) ist. Für den Einsatz als Elektroisolierfolien, z.B. zur Herstellung von Kondensatoren haben solche Folien den Vorzug, deren Dielektrizitätskonstante (gemessen bei 150°C; 1 kHz) $>3$ und deren spezifischer Durchgangswiderstand $< 10^{18}\ \Omega \times cm$ (gemessen bei 20°C) beträgt.

HOECHST AKTIENGESELLSCHAFT
KALLE Niederlassung der Hoechst AG



Die erfindungsgemäßen Folien sind grundsätzlich für alle Anwendungsgebiete verwendbar, in denen Polyesterfolien eingesetzt werden, die wünschenswerterweise hoch flammwidrig sein sollen.
Hauptsächliches Anwendungsgebiet ist jedoch der Einsatz als Isolationsfolie, wobei der Elektrosektor und der Motorensektor eine besondere Stellung einnehmen.

Die Folienstärken z.B. für die Kondensatorherstellung liegen üblicherweise im Bereich von 2 bis 15µm, während sie z.B. für die Nutisolation von Elektromotoren üblicherweise im Bereich von 50 bis 350 µm liegen, wobei diese Bereichsangaben jedoch keine Einschränkung bedeuten sollen.

Die Erfindung wird anhand der folgenden Beispiele näher erläutert, wobei eine Einschränkung auf die Ausführungsformen nicht bestehen soll.

<u>Beispiel 1</u>

Polyäthylenterephthalat, dessen Säurekomponente durch 4,3 Molprozent P-haltiger Kettenglieder mit der Formel

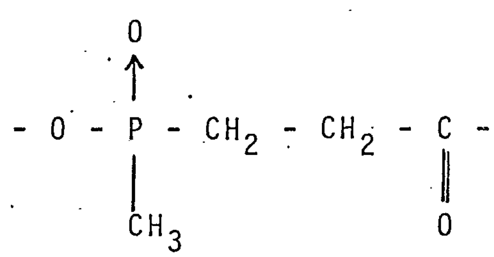

im folgenden als "Phospholan" bezeichnet

ersetzt waren und dessen SV-Wert 905 betrug, wurde mit 0,1

Gewichtsprozent $SiO_2$ als Schlupfmittel versetzt. Das Produkt wurde bei 275°C aus einer Breitschlitzdüse extrudiert und auf einer Kühlwalze mit einer Temperatur von 28°C abgekühlt. Die abgekühlte Vorfolie wurde bei 85°C um das 3,3-fache längsgestreckt und anschließend bei 90°C um das 3,5-fache quergestreckt. Die biaxial gestreckte Folie wurde bei 200°C thermofixiert, wobei eine Divergenz von 10% eingehalten wurde.
Die 75 µm starke Folie wurde als flammwidrige Nutisolation in Elektromotoren eingesetzt.

Beispiel 2

Es wurde unter den gleichen Bedingungen wie in Beispiel 1 gearbeitet, nur mit dem Unterschied, daß der "Phospholan"-Gehalt 7,1 Molprozent betrug.

Beispiel 3

Es wurde analog Beispiel 1 gearbeitet, nur mit dem Unterschied, daß die Endfolie 6 µm stark war.
Diese Folie wurde als Kondensatorfolie eingesetzt und zwar nachdem sie mit Aluminium bedampft war.

Beispiel 4

Es wurde analog Beispiel 3 gearbeitet, nur mit dem Unterschied, daß die Endfolie 12 µm stark war.
Diese Folie wurde zur Kabelisolation eingesetzt.

Beispiel 5

Es wurde analog Beispiel 1 gearbeitet, jedoch mit dem Unterschied, daß ein Polyäthylenterephthalat eingesetzt

wurde, das kein "Phospholan" enthielt. Diese Folien entsprachen den Folien nach dem Stand der Technik.

In der folgenden Tabelle sind die Eigenschaftswerte der Folien mit und ohne "Phospholan"-Gehalt aufgeführt.

TABELLE

| | | | |
|---|---|---|---|
| "Phospholan"-Gehalt (Molprozent) | 7,1 | 4,3 | 0 |
| Entflammbarkeit (Testmethode VDE 0471) | keine | schwer | entflammbar |
| Abtropfen | ohne | ohne | tropft immer |
| Verlöschen nach Brand | sofort | innerhalb höchstens 1 sec | innerhalb 10 sec |
| Reißfestigkeit ($N/mm^2$) | | | |
| längs | 230 | 230 | 230 |
| quer | 230 | 230 | 230 |
| Reißdehnung (%) | | | |
| längs | 120 | 120 | 120 |
| quer | 140 | 140 | 140 |
| Schrumpf bei 150°C (%) | | | |
| längs | 3,8 | 3,8 | 3,8 |
| quer | 3,8 | 3,8 | 3,8 |
| Dielektrizitätskonstante (150°C, 1 kHz) | 4,0 | 3,61 | 3,22 |
| Spezifischer Durchgangswiderstand ($\Omega$ x cm) bei 20°C | $1 \times 10^{17}$ | $2 \times 10^{17}$ | $3 \times 10^{17}$ |

Wie die Tabelle ausweist, sind die Folien die "Phospholan" enthielten, überhaupt nicht oder nur schwer entflammbar. Sie zeigen kein Abtropfen und falls sie ueberhaupt zum Brennen zu bringen sind, verlöschen sie nach sehr kurzer Zeit.

Die mechanischen Werte gegenüber reinen Polyäthylenterephthalatfolien sind unverändert und die elektrischen Werte sind nur unwesentlich geändert.

-----

BAD ORIGINAL

HOECHST AKTIENGESELLSCHAFT
KALLE Niederlassung der Hoechst AG

Hoe 77/K 033 - A 1 -

## Patentansprüche

1. Folie aus einem linearen Polyester aus Dicarbonsäure- und Diolkomponenten sowie P-haltigen Kettengliedern, wobei die P-haltigen Kettenglieder Struktureinheiten der Formel

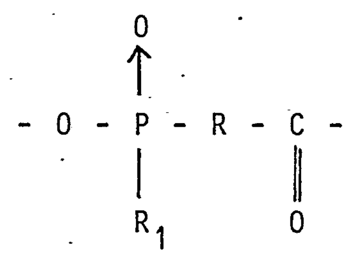

sind, welche ca. 3 bis 20 Molprozent der Säurekomponente des Polyesters ausmachen, wobei in der Formel

R einen gesättigten, offenkettigen oder cyclischen Alkylen-, einen Arylen- oder einen Aralkylenrest und

$R_1$ eine Alkylgruppe mit bis zu 6 C-Atomen, eine Aryl- oder Aralkylgruppe

bedeutet, dadurch gekennzeichnet, daß sie biaxial orientiert ist.

2. Folie nach Anspruch 1, dadurch gekennzeichnet, daß sie thermofixiert ist.

3. Folie nach einem der Ansprüche 1 oder 2, dadurch gekennzeichnet, daß sie ein Schlupfmittel enthält.

H O E C H S T   A K T I E N G E S E L L S C H A F T
KALLE Niederlassung der Hoechst AG



4. Folie nach einem der Ansprüche 1 bis 3, dadurch gekennzeichnet, daß sie als Schlupfmittel $SiO_2$ enthält.

5. Folie nach einem der Ansprüche 1 bis 4, dadurch gekennzeichnet, daß sie in Längs- und Querrichtung je um das 2,5- bis 4,5-fache gestreckt ist.

6. Folie nach einem der Ansprüche 1 bis 5, dadurch gekennzeichnet, daß sie eine Reißfestigkeit in Längs- und Querrichtung von $> 200\ N/mm^2$ aufweist.

7. Folie nach einem der Ansprüche 1 bis 6, dadurch gekennzeichnet, daß sie eine Reißdehnung von $>$ 100% in Längs- und Querrichtung aufweist.

8. Folie nach einem der Ansprüche 2 bis 7, dadurch gekennzeichnet, daß sie einen Schrumpf in Quer- und Längsrichtung bei 150°C (gemessen in Luft, 15 min) von $<$ 5% aufweist.

9. Folie nach einem der Ansprüche 1 bis 8, dadurch gekennzeichnet, daß sie eine Dielektrizitätskonstante (gemessen bei 150°C; 1 kHz) von $> 3$ aufweist.

10. Folie nach einem der Ansprüche 1 bis 9, dadurch gekennzeichnet, daß sie einen spezifischen Durchgangswiderstand von $< 10^{18}\ \Omega \times cm$, gemessen bei 20°C aufweist.

11. Verwendung einer Folie nach einem der Ansprüche 1 bis 10 als Isolationsfolie.

-----

Europäisches Patentamt

Nummer der Anmeldung
EP 78 10 0087

# EUROPÄISCHER RECHERCHENBERICHT

0000047

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | DE - A - 2 346 787 (HOECHST)<br>* Seite 13, Zeile 6; Seite 14, Zeile 1 * | 1 |
| | DE - B - 1 004 252 (DU PONT DE NEMOURS)<br>* Patentansprüche * | 1,2,5-11 |

**KLASSIFIKATION DER ANMELDUNG (Int.Cl.²)**

C 08 J 5/18
C 08 G 63/68
C 08 L 67/00
H 01 B 3/42

**RECHERCHIERTE SACHGEBIETE (Int. Cl.²)**

C 08 J 5/18
C 08 G 63/68

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 12-09-1978 | VAN GOETHEM |